# EUROPÄISCHE PATENTSCHRIFT

(11) **EP 3 909 545 B1**
(45) Veröffentlichungstag und Bekanntmachung des Hinweises auf die Patenterteilung: **04.12.2024**
(21) Anmeldenummer: 21173039.5
(22) Anmeldetag: 10.05.2021
(51) Int. Cl.: A61C 8/00

(54) **ENOSSALES ZAHNIMPLANTAT**
ENDOSSEOUS DENTAL IMPLANT
IMPLANT DENTAIRE ENOSSAL

(30) Priorität: 15.05.2020 DE 102020113282; 27.07.2020 DE 102020119710
(43) Veröffentlichungstag der Anmeldung: 17.11.2021
(73) Patentinhaber: Masur, Ralf, 86825 Bad Wörishofen (DE)
(72) Erfinder: Masur, Ralf, 86825 Bad Wörishofen (DE)
(74) Vertreter: Meissner Bolte Partnerschaft mbB

(56) Entgegenhaltungen:
- EP-A1- 1 795 148
- WO-A1-2008/068338
- WO-A1-2020/074647
- CN-U- 208 371 937
- ES-A1- 2 308 874

## Beschreibung

Die Erfindung betrifft ein enossales Zahnimplantat mit einer Schnittstelle im zervikalen Bereich zur Aufnahme eines Abutment, einem rotationssymmetrischen Implantatkern, mit einem Gewinde, das sich vom zervikalen zu einem gegenüberliegenden apikalen Bereich erstreckt, wobei der Durchmesser des Implantatkernes in Richtung zum apikalen Bereich abnimmt, weiterhin das Gewinde in einem ersten Abschnitt einen gleichbleibenden Außendurchmesser und in einem zweiten, apikal orientierten Abschnitt einen sich verjüngenden Außendurchmesser aufweist, das Gewinde Ausnehmungen, Schneidnuten und/oder Schneidkanten besitzt und der Implantatkern am apikalen Ende abgerundet ausgeführt ist gemäß Oberbegriff des Anspruches 1.

Aus der EP 2 787 920 B1 ist ein enossales Einzelzahnimplantat für einen festsitzenden Zahnersatz vorbekannt. Dieses bekannte Zahnimplantat besteht aus einem im Wesentlichen zylindrischen, in eine in einen Kieferknochen eingebrachte Bohrung einsetzbaren Grundkörper mit einer Ringausnehmung und mit einem Formschlussabschnitt sowie mit einer, zu seinem koronalen Ende hin offenen, zervikal zu der Ausnehmung angeordneten Bohrung, die einen am zervikalen Ende im Grundkörper angeordneten Gewindeabschnitt zur Festlegung einer Halteschraube aufweist.

In die Ausnehmung des Grundkörpers ist ein Abutment mit einem Formschlussabschnitt einsetzbar. Weiterhin ist hierfür eine Bohrung zur Aufnahme einer Halteschraube und ein Befestigungskopf für den Zahnersatz vorhanden. Die Halteschraube ist in eine Blindbohrung des Grundkörpers einsetzbar.

Der Implantatgrundkörper weist eine sich zum apikalen Bereich hin verjüngende Form auf und besitzt ein Außengewinde in Form eines eingängigen Schneidgewindes mit Schneidkanten, die in axialer Richtung die einzelnen Gewindegänge unterbrechen.

Das Dentalimplantat nach WO 2014/026706 A1 besitzt einen Implantatkörper mit einem Außengewinde zur Verankerung des Implantates in einem Kieferknochen. Im Außengewinde sind Schneidnuten angeordnet. Das bekannte Dentalimplantat weist ein koronales Ende auf, von dem sich zum apikalen Ende abschnittsweise ein Hohlraum erstreckt.

Der Hohlraum umfasst einen Konusabschnitt, einen Rotationssicherungsabschnitt und ein Innengewinde. Im Dentalimplantat-Hohlraum ist ein Sekundärteil zumindest teilweise aufnehmbar.

Zwischen dem koronalen Ende und dem Bereich mit Außengewinde besitzt das Dentalimplantat einen zylindrisch ausgebildeten Bereich.

Das vorbekannte Außengewinde ist als ein eingängiges Gewinde ausgebildet und weist zwischen benachbarten Gewindeflanken zwei umlaufende Erhöhungen auf, die im Wesentlichen parallel zu den Gewindeflanken des Außengewindes verlaufen. Hierdurch bilden sich zwischen zwei benachbarten Gewindeflanken drei Rillen aus. Ein sogenannter Koronalbereich ist im Wesentlichen zylindrisch ausgebildet. Ein Apikalbereich ist zum apikalen Ende hin konisch zulaufend realisiert. Am apikalen Ende ist der Apikalbereich als Stumpf ausgeführt.

Ausgehend vom koronalen Ende weist der Dentalimplantat-Hohlraum zum apikalen Ende hin einen Konusabschnitt auf und besitzt dort den erwähnten Rotationssicherungsabschnitt mit Innengewinde.

Der Konusabschnitt mit Innengewinde dient der Aufnahme des Sekundärteiles mit einem Sekundärteilkörper. Das Dentalimplantat und das Sekundärteil sind mittels einer Sekundärteilschraube vormontiert und bilden ein Set.

Die EP 3 235 456 B1 offenbart ein Implantat mit einer prothetischen Schnittstelle im zervikalen Bereich und einem Implantatkern sowie mindestens einem Gewinde, das sich vom zervikalen Bereich zu einem gegenüberliegenden apikalen Bereich erstreckt.

Der Außendurchmesser des Kerns nimmt in apikaler Richtung ab, wobei der Außendurchmesser des Gewindes in einem ersten zylindrischen Abschnitt gleichbleibend ist.

Der Außendurchmesser des Gewindes nimmt in einem zweiten verjüngten Abschnitt ab, und zwar auch im apikalen Bereich.

Die Abnahmerate des Außendurchmessers des Gewindes ist in ihrem verjüngten Abschnitt größer als die Abnahmerate des Durchmessers des Kerns.

Die Breite des Gewindes in den einzelnen Abschnitten unterscheidet sich.

Weiterhin weist das Gewinde halbkugelförmige Hohlräume mit Schneidkanten auf, die entlang der gesamten Länge beabstandet sind.

In einer Weiterbildung kann das Implantat zwei gegenüberliegende, das heißt gegenläufige Gewinde besitzen.

Am apikalen Ende ist das Implantat abgerundet ausgeführt.

Die prothetische Schnittstelle kann ein Verbindungsstück einschließen und eine Verdrehsicherung in Form eines Mehrkantes besitzen.

Das Dentalimplantat nach CN 208371937 U besitzt einen Implantatkörper mit durchgängigem Gewinde. Am Implantatkern sind kreisförmige Ausnehmungen gebildet, welche das Eindringen von neu gebildetem Knochen begünstigen sollen.

WO 2020/074647 A1 offenbart ein Implantat gemäß dem Oberbegriff des Anspruchs 1.

Die oben geschilderten bekannten zweiteiligen enossalen Zahnimplantate stellen eine beispielhafte, nicht abschließende Darstellung am Markt befindlicher Ausführungsformen dar, wobei es bei allen vergleichbaren Implantatsystemen zu einem mehr oder weniger auffallenden krestalen Knochenverlust kommt. Grundsätzlich zeigen die verschiedenen enossalen Implantatsysteme bei unterschiedlichen Indikationen eine gute bis sehr gute Langzeitprognose.

Der krestale Knochen ist der im weitesten koronal bzw. marginale gelegene Anteil des periimplantären Knochens. Die Beurteilung der Knochenverhältnisse um ein Implantat ist für die Analyse der Langzeitprognose unabdingbar. Veränderungen im koronalen Anteil des Knochenlagers im Sinne eines Knochenabbaus sind hierfür ein wichtiger Parameter und gelten als pathologisches Zeichen, das bis zu einem Implantatverlust fortschreiten kann.

Die Ursachen für den krestalen Knochenabbau sind nicht endgültig bekannt bzw. nicht endgültig geklärt. Eine Ursache ist womöglich die Positionierung der Implantate bzw. Implantatschulter und der Übergang von glatter zu rauer Implantatoberfläche. Auch eine biomechanische Überlastung des Knochens kann zu einem unerwünschten Knochenabbau führen.

Aus dem Vorgenannten ist es daher Aufgabe der Erfindung, ein weiterentwickeltes enossales Zahnimplantat mit einer Schnittstelle im zervikalen Bereich zur Aufnahme eines Abutments anzugeben, das von einem rotationssymmetrischen Implantatkern mit einem Schneidgewinde ausgeht, wobei eine wesentliche Erhöhung der Knochenbedeckungsrate im entscheidenden krestalen Knochen geschaffen werden soll, so dass sich die Langzeitprognose beim Einsatz der erfindungsgemäßen Implantate maßgeblich verbessert.

Darüber hinaus soll die Grundkonfiguration des Implantates geeignet sein, ultrakurze, miniaturisierte Implantate auszubilden.

Die Lösung der Aufgabe der Erfindung erfolgt durch das enossale Zahnimplantat gemäß der Merkmalskombination nach Patentanspruch 1, wobei die Unteransprüche mindestens zweckmäßige Ausgestaltungen und Weiterbildungen umfassen.

Es wird demnach von einem enossalen Zahnimplantat mit einer Schnittstelle im zervikalen Bereich ausgegangen.

Die Schnittstelle dient der Aufnahme eines Abutments.

Das Zahnimplantat weist einen rotationssymmetrischen Implantatkern mit einem Gewinde auf, das als Außengewinde sich vom zervikalen zu einem gegenüberliegenden apikalen Bereich erstreckt.

Der Durchmesser des Implantatkerns in Richtung zum apikalen Bereich ist abnehmend ausgeführt.

Das Gewinde weist weiterhin in einem ersten Abschnitt einen gleichbleibenden Außendurchmesser und in einem zweiten, apikal orientierten Abschnitt einen sich verjüngenden Außendurchmesser auf.

Das Gewinde besitzt Ausnehmungen, Schneidkanten und/oder Schneidnuten. Der Implantatkern ist an seinem apikalen Ende abgerundet ausgeführt und besitzt demnach eine konvexe Gestalt.

Erfindungsgemäß ist das Gewinde als ein Haupt- und sich zervikal anschließendes, mehrgängiges, links-rechts-gegenläufiges Mikro-Feingewinde ausgebildet.

Der Durchmesser des Mikro-Feingewindes ist kleiner als der Durchmesser des sich unmittelbar anschließenden Abschnittes des Hauptgewindes.

In bevorzugter Ausführungsform ist das Hauptgewinde zweigängig und das Mikro-Feingewinde fünfgängig realisiert.

Die Abutment-Schnittstelle ist als Sackloch-Kernbohrung mit Implantatschulter ausgeführt.

Im Bereich des Überganges von der Sackloch-Kernbohrung zur Implantatschulter kann ein Innenkonus, aber auch ein Außenkonus ausgebildet werden.

Im Bereich des Überganges der Schnittstelle kann eine Planfläche vorgesehen sein.

Die Sackloch-Kernbohrung weist ein Innengewinde zum Ausführen der Implantat-Abutment-Verbindung auf.

Das Hauptgewinde ist selbstschneidend ausgebildet.

In bevorzugter Weiterbildung der Erfindung ist ein Übergangsbereich von Haupt- und Mikro-Feingewinde vorgesehen, in dem sich die Gewinde überschneiden, wobei auf Abschnitten von Gewindeflanken des Hauptgewindes Mikro-Feingewinde-Rillen oder Mikro-Feingewinde-Abschnitte vorgesehen sind.

Die Verbindung zwischen Implantatkern und Abutment ist in einer bevorzugten Ausführungsform zweiteilig realisiert.

Das Design des Implantathalses sorgt für einen spannungsfreien Sitz im krestalen Knochen beim maximalem Erhalt des kortikalen Knochens. Hierdurch ist weniger Knochenaufbau nach dem Setzen des Implantates erforderlich.

Die eingesetzten Mikrorillen bzw. Mikro-Feingewinde dienen zum einen der Vergrößerung der Implantatoberfläche und sorgen zum anderen für eine erhöhte Knochenbedeckungsrate im entscheidenden krestalen Knochen.

Eine mehrfache Ausbildung von drei Schneidnuten im Hauptgewinde dient der verbesserten Einbringung während der Inzesierung und ist für alle Knochenklassen geeignet.

Die verrundete Implantatspitze, das heißt die konvexe Form, vermindert das Verletzungsrisiko zum Beispiel der Sinusmembran.

Für die Implantat-Abutment-Verbindung kann eine Nut-Nocken-Lösung Anwendung finden, welche im Vergleich zu Polygonprofilen oder polygonalen Positionierungsindexdesigns sich als rotationsstabiler erwiesen hat.

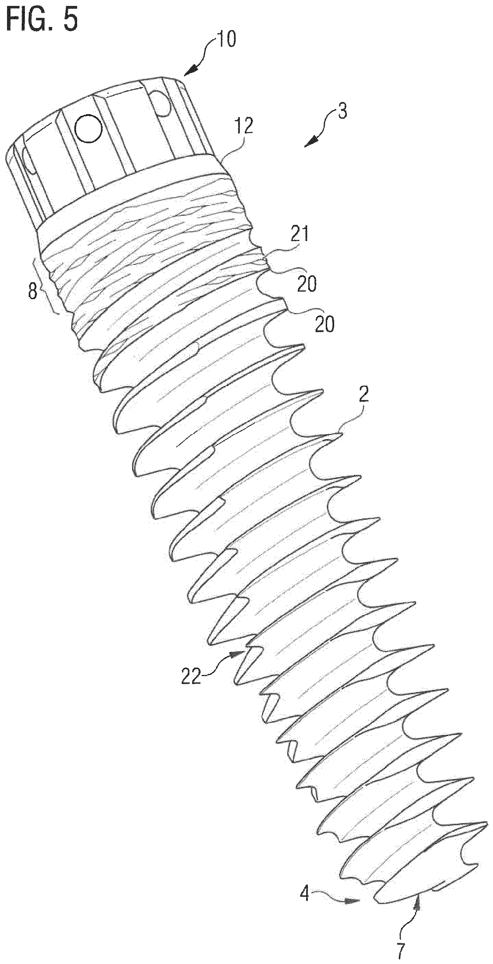

Die Erfindung soll nachstehend anhand von Ausführungsbeispielen sowie unter Zuhilfenahme von Figuren näher erläutert werden. Dabei zeigt nur die Fig. 5 ein Implantat, welches gemäß der Erfindung ist.

Hierbei zeigen:
- Fig. 1: eine beispielhafte Darstellung eines Mini-Implantates mit beispielhaften, nicht einschränkenden Bemaßungen;
- Fig. 2a - c: beispielhafte Darstellungen von Implantaten mit fixiertem Abutment sowie einer Längsschnittdarstellung (Fig. 2c);

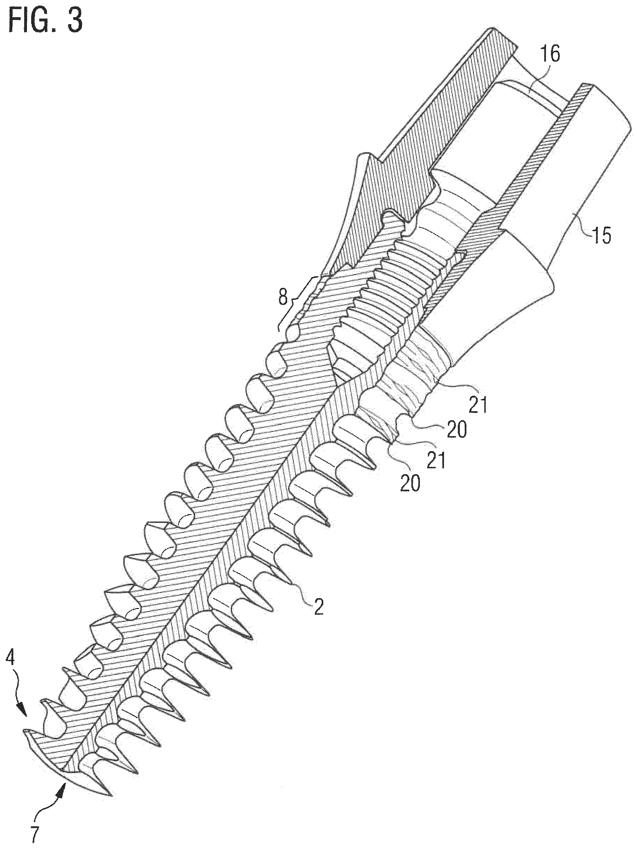

- Fig. 3: eine fotorealistische Darstellung in teilweggeschnittener Form eines Implantates ähnlich der Darstellungen nach den Figuren 2a - c;
- Fig. 4: eine fotorealistische, teilweggebrochene Darstellung eines erfindungsgemäßen Implantates mit Innenkonus im ringförmigen Implantatabschluss; und
- Fig. 5: eine fotorealistische Darstellung eines Implantats analog der Darstellung nach Fig. 1.

Die in den Figuren gezeigten Implantate finden Anwendung als enossales Zahnimplantat und verfügen über eine Schnittstelle im zervikalen Bereich zur Aufnahme eines Abutment.

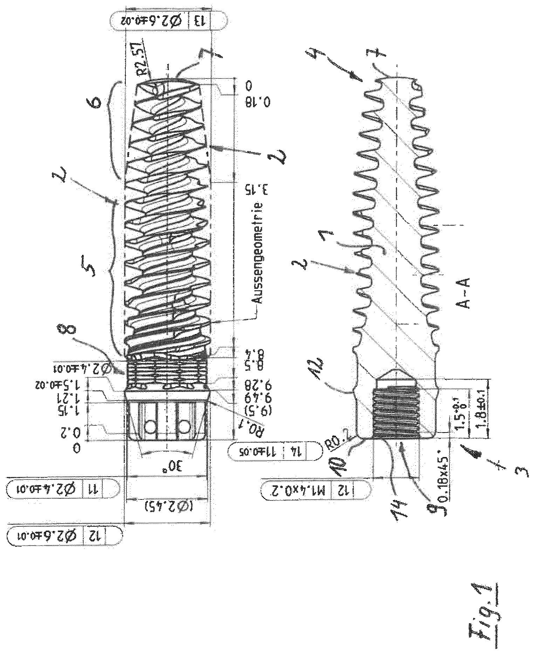

Der Implantatkern 1 ist gemäß Figur 1 (Schnittdarstellung) rotationssymmetrisch ausgeführt und besitzt ein Gewinde 2, das sich von einem zervikalen Bereich 3 zu einem apikalen Bereich 4 erstreckt.

Im zervikalen Bereich befindet sich eine Aufnahme für ein in der Figur 1 nicht gezeigtes Abutment.

Der Durchmesser des Implantatkerns 1 nimmt in Richtung apikaler Bereich 4 ab.

Das Gewinde 2 weist an einem ersten Abschnitt 5 einen gleichbleibenden Außendurchmesser und in einem zweiten Abschnitt 6, der apikal orientiert ist, einen sich verjüngenden Außendurchmesser auf.

Das Gewinde besitzt in den Figuren ersichtliche Ausnehmungen, Schneidnuten oder Schneidkanten, so dass ein selbstschneidendes Gewinde resultiert ist.

Der Implantatkern 1 ist an seinem apikalen Ende 7 abgerundet ausgeführt.

Wie aus den Figuren ersichtlich, ist das Gewinde 2 als ein durchgängiges Hauptgewinde und sich zervikal anschließendes, mehrgängiges links-rechts-gegenläufiges Mikro-Feingewinde 8 ausgebildet.

Der Durchmesser des Mikro-Feingewindes 8 ist kleiner als der Durchmesser des sich unmittelbar anschließenden Abschnittes des Hauptgewindes 2, was aus den beispielhaften Durchmesserangaben nach Figur 1 nachvollzogen werden kann.

In bevorzugter Ausführungsform ist das Hauptgewinde 2 zweigängig und das Mikro-Feingewinde 8 fünfgängig ausgebildet.

Die Schnittstelle zur Aufnahme des Abutments weist eine Sackloch-Kernbohrung 9 mit Implantatschulter 10 auf.

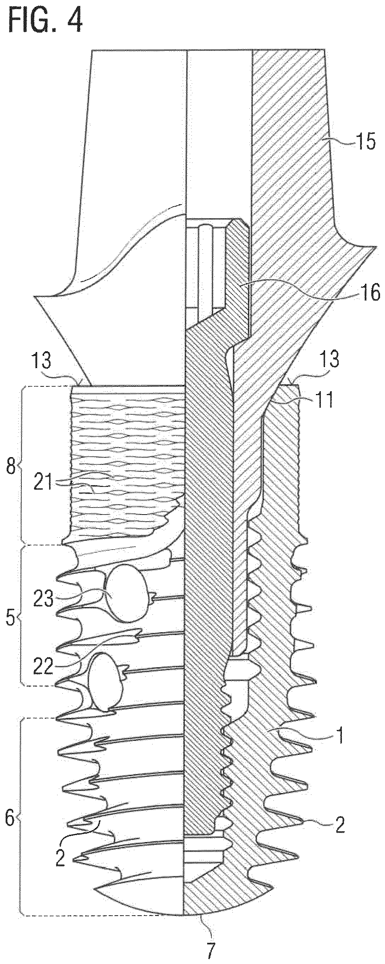

Im Bereich des Überganges von der Kernbohrung 9 zur Implantatschulter 10 kann, wie in der Figur 4 gezeigt, ein Innenkonus 11 vorhanden sein.

Es ist aber auch die Ausführung eines Außenkonus 12 am Außendurchmesser im Bereich des Implantatkopfes unterhalb der Implantatschulter 10, das heißt in apikaler Richtung möglich, was bei miniaturisierten Implantaten von Vorteil ist.

Weiterhin kann im Bereich des Überganges eine Planfläche 13 als Planauflage zur flexiblen Aufnahme unterschiedlicher Abutments ausgebildet werden.

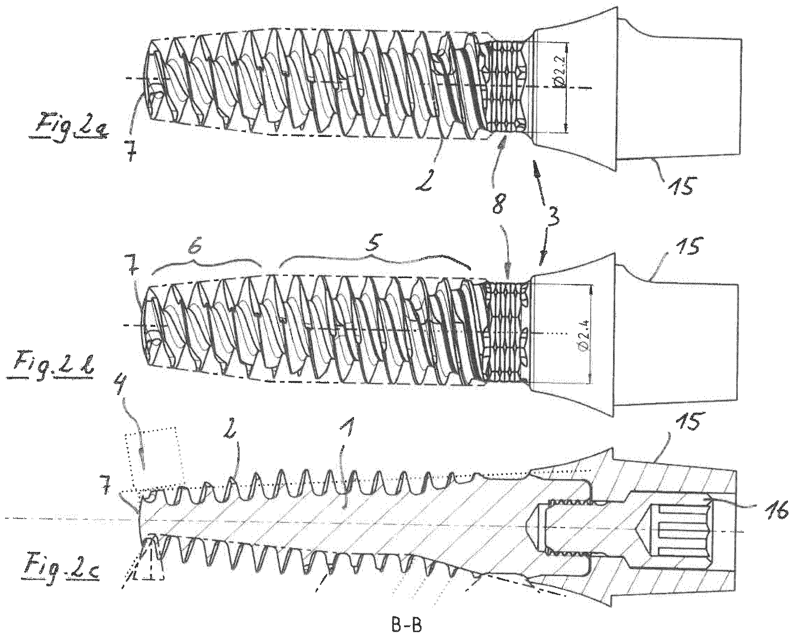

Die Sackloch-Kernbohrung 9 besitzt ein Innengewinde 14 zur Implantat-Abutment-Verbindung, was sich aus den Darstellungen nach Figur 2a - c ergibt.

Das Abutment besteht diesbezüglich aus einem Außenteil 15 mit Innenverschraubung 16, wobei die Innenverschraubung 16 ein Außengewinde aufweist, das kompatibel zum Innengewinde 14 in der Sackloch-Kernbohrung 9 ist.

Im Übergangsbereich von Hauptgewinde 2 zum Mikro-Feingewinde 8 überschneiden sich die beiden vorbezeichneten Gewinde. Hierbei sind auf Abschnitten von Gewindeflanken 20 des Hauptgewindes 2 Mikro-Feingewinde-Rillen 21 vorgesehen.

Die Darstellung nach Figur 4 zeigt Schneidnuten bzw. Schneidkanten 22 und oberflächenvergrößernde Ausnehmungen 23 im Implantatkern 1.

Das durchmesserreduzierte Design des Implantathalses im Bereich des Mikrofeingewindes 8 sorgt für einen spannungsfreien Sitz im krestalen Knochen unter maximalen Erhalt desselben. Es ist hierdurch weniger Knochenaufbau notwendig.

Die Mikrorillen bzw. das Mikrogewinde 8 vergrößert die Implantat-Oberfläche und sorgt für eine erhöhte Knochenbedeckungsrate im krestalen Knochen.

## Patentansprüche

1. Enossales Zahnimplantat mit einer Schnittstelle im zervikalen Bereich zur Aufnahme eines Abutments (15; 16), einem rotationssymmetrischen Implantatkern (1) mit einem Gewinde (2), das sich vom zervikalen Bereich zu einem gegenüberliegenden apikalen Bereich (4) erstreckt, wobei der Durchmesser des Implantatkernes (1) in Richtung zum apikalen Bereich (4) abnimmt, weiterhin das Gewinde (2) in einem ersten Abschnitt (5) einen gleichbleibenden Außendurchmesser und in einem zweiten, apikal orientierten Abschnitt (6) einen sich verjüngenden Außendurchmesser aufweist, das Gewinde, Schneidnuten und/oder Schneidkanten (22) besitzt und der Implantatkern (1) am apikalen Ende (7) abgerundet ausgeführt ist, wobei
das Gewinde (2) als durchgängiges Haupt- und sich zervikal anschließendes, Mikro-Feingewinde (8) ausgebildet ist, wobei der Durchmesser des Mikro-Feingewindes (8) kleiner als der Durchmesser des sich unmittelbar anschließenden Abschnittes des Hauptgewindes (2) ist, **dadurch gekennzeichnet, dass**
das Mikro-Feingewinde (8) mehrgängig, links-rechts-gegenläufig und dreibis sechs-, bevorzugt fünfgängig ausgebildet ist sowie im Implantatkern (1) kreisförmige, oberflächenvergrößernde Ausnehmungen (23) ausgebildet sind.

2. Enossales Zahnimplantat nach Anspruch 1,
**dadurch gekennzeichnet, dass**
das Hauptgewinde (2) zweigängig ausgebildet ist.

3. Enossales Zahnimplantat nach Anspruch 1 oder 2,
**dadurch gekennzeichnet, dass**
die Schnittstelle als Sackloch-Kernbohrung (9) mit Implantatschulter (10) ausgeführt ist, wobei im Bereich des Überganges von der Kernbohrung (9) zur Implantatschulter (10) ein Innenkonus (11) vorgesehen ist.

4. Enossales Zahnimplantat nach Anspruch 3,
**dadurch gekennzeichnet, dass**
im Bereich des Überganges eine Planfläche (13) ausgebildet ist.

5. Enossales Zahnimplantat nach einem der vorangegangenen Ansprüche, **dadurch gekennzeichnet, dass**
das Hauptgewinde (2) selbstschneidend ausgebildet ist.

## Claims

1. Endosseous dental implant with an interface in the cervical area for receiving an abutment (15; 16), a rotationally symmetrical implant core (1) with a thread (2) that extends from the cervical area to an opposite apical area (4), wherein the diameter of the implant core (1) decreases in the direction of the apical area (4), moreover the thread (2) has a constant outer diameter in a first section (5) and a tapered outer diameter in a second, apically orientated section (6), the thread has cutting grooves and/or cutting edges (22), and the implant core (1) is rounded at the apical end (7), wherein
the thread (2) is designed as a continuous main and cervically adjoining micro-fine thread (8), wherein the diameter of the micro-fine thread (8) is smaller than the diameter of the immediately adjoining section of the main thread (2)
**characterized in that**
the micro-fine thread (8) is designed as a multi-start, left-right counter-directional thread having three to six, preferably five starts, and circular, surface enlarging recesses (23) are formed in the implant core (1) .

2. Endosseous dental implant according to Claim 1, **characterized in that**
the main thread (2) is constructed with two starts.

3. Endosseous dental implant according to Claim 1 or 2, **characterized in that**
the interface is designed as a blind hole core bore (9) with implant shoulder (10), wherein an inside taper (11) is provided in the area of the transition from the core bore (9) to the implant shoulder (10).

4. Endosseous dental implant according to Claim 3, **characterized in that**
a plane surface (13) is formed in the area of the transition.

5. Endosseous dental implant according to any one of the preceding claims,
**characterized in that**
the main thread (2) is self-tapping.

## Revendications

1. Implant dentaire enossal comprenant une interface dans la zone cervicale pour recevoir un pilier prothétique (15 ; 16), un noyau d'implant (1) symétrique en rotation avec un filet (2) qui s'étend de la zone cervicale vers une zone apicale (4) opposée, dans lequel le diamètre du noyau d'implant (1) décroît en direction de la zone apicale (4), en outre le filet (2) présente dans un premier tronçon (5) un diamètre extérieur constant et un diamètre extérieur se réduisant dans un second tronçon orienté apical (6), le filet possède des rainures de coupe et/ou des bords de coupe (22) et le noyau d'implant (1) est conçu arrondi sur l'extrémité apicale (7),
dans lequel
le filet (2) est conçu en tant que filet principal traversant et micro-filet fin (8) se raccordant côté cervical, dans lequel le diamètre du micro-filet fin (8) est plus petit que le diamètre du tronçon du filet principal (2) se raccordant directement,
**caractérisé en ce que**
le micro-filet fin (8) est à multi-pas, opposé droite-gauche et est conçu avec trois à six, de préférence cinq pas, et des évidements (23) circulaires et agrandissant la surface sont formés dans le noyau d'implant (1).

2. Implant dentaire enossal selon la revendication 1, **caractérisé en ce que** le filet principal (2) est conçu à deux pas.

3. Implant dentaire enossal selon la revendication 1 ou 2, **caractérisé en ce que** l'interface est formée en tant qu'alésage borgne (9) avec un épaulement d'implant (10), dans lequel un cône intérieur (11) est prévu au niveau de la transition de l'alésage (9) à l'épaulement d'implant (10).

4. Implant dentaire enossal selon la revendication 3, **caractérisé en ce qu'**une surface plane (13) est prévue au niveau de la transition.

5. Implant dentaire enossal selon l'une des revendications précédentes, **caractérisé en ce que** le filet principal (2) est conçu auto-taraudant.
